# EUROPÄISCHE PATENTANMELDUNG

(11) **EP 2 085 738 A2**
(43) Veröffentlichungstag der Anmeldung: **05.08.2009**
(21) Anmeldenummer: 09000853.3
(22) Anmeldetag: 22.01.2009
(51) Int. Cl.: F41H 3/00, B64C 39/02

(54) **Unbemanntes Fahrzeug mit einer Tarnvorrichtung**

(30) Priorität: 01.02.2008 DE 102008007208
(71) Anmelder: Diehl BGT Defence GmbH & Co.KG, 88662 Überlingen (DE)
(72) Erfinder:
(74) Vertreter: Diehl Patentabteilung

(57) **Zusammenfassung**

Die Erfindung betrifft ein unbemanntes Fahrzeug (2, 28) mit einer Tarnvorrichtung (4).

Es wird vorgeschlagen, dass die Tarnvorrichtung (4) eine Eigenschaft eines Tieres nachbildet. Es kann trotz einer deutlichen Sichtbarkeit des unbemannten Fahrzeugs (2, 28) eine effektive Tarnung erreicht werden.

## Beschreibung

Ein unbemanntes Fahrzeug, wie ein unbemanntes Luftfahrzeug oder Wasserfahrzeug, insbesondere Unterwasserfahrzeug, kann zur Aufklärung, Warnung und Überwachung eingesetzt werden. Für solche Aufgaben kann ein unbemanntes Fahrzeug mit Sensoren, z.B. bildgebenden Sensoren, ausgerüstet sein. Auch andere Wirksysteme, wie Störsysteme, sind denkbar.

In manchen Fällen können diejenigen, denen ein Einsatz eines unbemannten Fahrzeugs gilt, ein Interesse daran haben, die mit dem Einsatz verbundene Absicht zu vereiteln oder zumindest der Absicht gewahr zu werden. Die nächstliegende Abwehrmaßnahme ist zunächst, das unbemannte Fahrzeug zu identifizieren. Um ein unbemanntes Fahrzeug zu identifizieren, können unterschiedliche Sensoren zum Einsatz kommen, vorzugsweise bildgebende Sensoren. Um ein Fahrzeug vor solchen Sensoren zu verbergen, ist es bekannt, unbemannte Fahrzeuge mit einer Tarnvorrichtung möglichst wenig sichtbar bzw. erkennbar zu machen.

Es ist eine Aufgabe der vorliegenden Erfindung ein unbemanntes Fahrzeug mit einer wirksamen Tarnvorrichtung anzugeben.

Diese Aufgabe wird durch ein unbemanntes Fahrzeug der eingangs genannten Art gelöst, bei dem die Tarnvorrichtung erfindungsgemäß eine Eigenschaft eines Tieres nachbildet. Es kann trotz einer deutlichen Sichtbarkeit des unbemannten Fahrzeugs eine effektive Tarnung erreicht werden.

Die Erfindung geht hierbei von der Überlegung aus, dass eine Schwierigkeit bei der Identifizierung eines unbemannten Fahrzeugs in der Unterscheidung gegenüber anderen Objekten liegt. Im Fall eines zu überwachenden Luftraums sind dies sonstige Flug- und Schwebegeräte, wie entfernte Verkehrsflugzeuge, Hubschrauber und Wetterballons, aber auch Tiere, wie Vögel, Fledermäuse und große Insekten. Im Fall einer zu überwachenden Wasseroberfläche oder eines Unterwasserbereichs sind es entfernte Wasserfahrzeuge und auch Tiere, wie Vögel und Fische. Eine Unterscheidung zwischen einem unbemannten Fahrzeug und einem Tier wird über solche Merkmale erfolgen, die ein Tier gegenüber einem bekannten unbemannten Fahrzeug unterscheidet. Wird ein Fahrzeug mit einem unterscheidenden Tiermerkmal versehen, schlägt eine hierauf gerichtete Unterscheidung fehl.

Das unbemannte Fahrzeug kann ein Fluggerät oder ein Wasser- oder Unterwasserfahrzeug sein. Die Tarnvorrichtung kann eine optische Eigenschaft nachbilden, insbesondere zusätzlich ist eine akustische und/oder Verhaltenseigenschaft vorteilhaft, die zweckmäßigerweise eine Bewegungseigenschaft ist.

In einer vorteilhaften Ausführungsform der Erfindung umfasst das Fahrzeug ein Antriebsaggregat, das durch die Tarnvorrichtung zumindest nach vorne und zu den Seiten verdeckt ist. Da ein Antriebsaggregat eine deutliche Unterscheidung eines Fahrzeugs von einem Tier darstellt, kann ein Verdecken des Antriebsaggregats zu einer deutliche optischen Tarnung und zusätzlich zu einer Abschirmung von Geräuschen führen, über die eine Diskriminierung ansonsten möglich wäre.

Umfasst das Fahrzeug mehrere Antriebsaggregate, so ist es vorteilhaft, wenn die Tarnvorrichtung die Antriebsaggregate mit Nachbildungen verschiedener Tierkörperteile verdeckt, z.B. mit Nachbildungen eines Flügels und eines Hinterteils eines Vogels. Auf diese Weise können auch insbesondere mehr als zwei relativ großvolumige Antriebsaggregate unauffällig getarnt werden.

Unbemannte Fahrzeuge treten insbesondere zur Aufklärung in der Luft oder im Wasser nur einzeln auf. Daher ist eine sehr zuverlässige Diskriminierung eine solche, die ein Einzelobjekt von mehreren gleichartigen Objekten trennt. Diese Unterscheidung kann getäuscht werden, wenn das Fahrzeug mehrere gleichartige und voneinander beabstandete Elemente aufweist, die in ihrer Gesamtheit einen Tierschwarm nachbilden. So kann jedes Element für sich ein Tier nachbilden, wobei die Tiernachbildungen zweckmäßigerweise zumindest im Wesentlichen identisch sind.

Vorteilhafterweise sind die Elemente jeweils durch zumindest ein Verbindungsmittel mit zumindest einem der anderen Elemente verbunden und die Verbindungsmittel machen jeweils höchstens 1/10 der sichtbaren Fläche eines Elements aus. Auf diese Weise können die Elemente unauffällig zusammengehalten werden. Die sichtbare Fläche ist vorteilhafterweise auf eine Betrachtungsrichtung von vorne und/oder von unten auf das Fahrzeug gesehen, wobei die Verbindungsmittel zweckmäßigerweise von allen Betrachtungsrichtungen nur jeweils höchstens 1/10 der sichtbaren Fläche eines Elements ausmachen.

Umfassen die Elemente periphere Elemente und ein zentrales Element, wobei die peripheren Elemente jeweils ein Antriebsaggregat umfassen und das zentrale Element eine Steuereinheit, so kann das Fahrzeug besonders flugstabil bewegt werden und ist insbesondere gut in einem Schwebezustand zu halten.

In einer vorteilhaften Weiterbildung der Erfindung bildet die Tarnvorrichtung einen Vogel nach und weist Flügelelemente auf, die zum Schlagen vorgesehen sind. Hierdurch kann eine für Vögel typische und unbemannte Fluggeräte untypische Bewegung erzielt werden, die schwer von einem Vogel zu unterscheiden ist.

Zweckmäßigerweise sind die Flügelelemente zu einem Schlagantrieb durch einen Luftwiderstand vorbereitet. Hierdurch kann auf einen Antrieb für die Flügelelemente verzichtet werden und das Fluggerät kann einfach gehalten bleiben.

Vorteilhafterweise sind die Flügelelemente zusätzlich zu Flügeln vorhanden. Es kann getrennt werden zwischen flugstabilisierenden und tragenden Eigenschaften der Flügel und Tarnungseigenschaften der Flügelelemente, wodurch ein stabiles Flugverhalten des Fluggeräts erreichbar ist.

Um ruhende Flügel bei Vorhandensein von schlagenden Flugelementen möglichst weitgehend optisch zu verbergen sind die Flügelelemente vorteilhafterweise optisch auffälliger gestaltet sind als die Flügel.

Eine andere als eine nur optische Tarnungseigenschaft kann durch ein Steuermittel erreicht werden, die dazu vorgesehen ist, eine Bewegung ungleichmäßig zu gestalten und eine Tierbewegung nachzubilden. Das Unterscheidungskriterium der gleichmäßigen Bewegung kann umgangen und das Fahrzeug effektiv getarnt werden.

Zweckmäßigerweise ist die Bewegung eine Fortbewegung, wie ein Flug oder ein Gleiten eines Fisches unter Wasser.

Vorteilhafterweise ist das Steuermittel dazu vorgesehen, mehrere unterschiedliche Bewegungsmodi, insbesondere Flugmodi, abwechselnd zu steuern, zweckmäßigerweise unrhythmisch. Es kann eine typische Tierbewegung sehr ähnlich nachgebildet und eine weit reichende Tarnung erreicht werden. Ist das Steuermittel dazu vorgesehen, einen Steigflug und einen einem Gleitflug zumindest nachgebildeten Flug zu steuern, so kann ein besonders tierhafter Bewegungsablauf erreicht werden, der schwer als nachgemacht erkennbar ist.

Eine weitere Verbesserung der Tarnung kann erreicht werden durch zum Schlagen vorgesehene Flügelelemente, wobei das Steuermittel dazu vorgesehen ist, im Steigflug eine Bewegung und im Gleitflug ein Ruhen der Flügelelemente zu steuern.

Ein auf eine andere als eine optische Unterscheidungseigenschaft gerichtete Tarnung kann durch ein Steuermittel erreicht werden, das dazu vorgesehen ist, ein Antriebsaggregat so anzusteuern, dass das Antriebsaggregat ein ungleichmäßiges Geräusch aussendet. Eine Erkennungsvorrichtung, die auf ein übliches gleichmäßiges Fahrzeuggeräusch sensibel ist, kann überwunden werden.

Eine zusätzliche akustische Tarnung kann dadurch bewirkt werden, dass die Tarnvorrichtung ein Geräuschmittel zum Aussenden eines tierspezifischen Geräuschs umfasst.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: ein unbemanntes Fluggerät mit einer Vogeltarnung in einer Darstellung von unten,
- Fig. 2: das Fluggerät in einer Silhouette von vorne und
- Fig. 3: ein als Vogelschwarm getarntes Fluggerät.

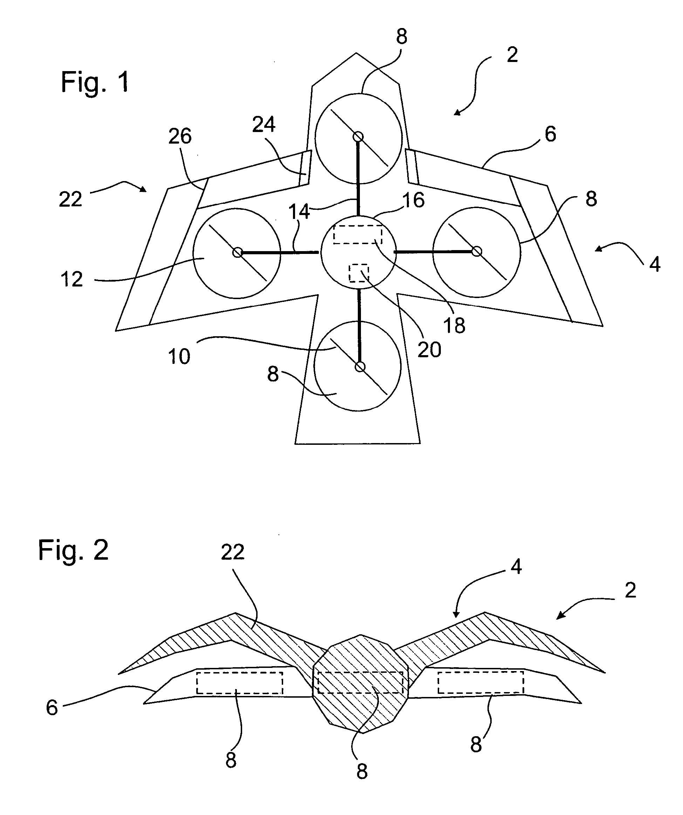

In Fig. 1 ist ein als Fluggerät ausgeführtes unbemanntes Fahrzeug 2 in einer Darstellung von unten gezeigt, das eine Tarnvorrichtung 4 mit einer Außenhülle 6 in Form eines großen Vogels aufweist, beispielsweise eines Raubvogels. Die Form kann in einer einfacheren Ausführungsform so stilisiert sein, dass wenigstens eine Silhouette des Vogels nachgebildet ist. Eine Silhouette des Fluggeräts von vorne ist in Fig. 2 dargestellt. Das Fluggerät ist mit vier Antriebsaggregaten 8 ausgestattet, die jeweils einen Rotor 10 in einer röhrenförmigen Öffnung 12 der Außenhülle 6 aufweisen. Durch die Außenhülle 6 sind alle Antriebsaggregate 8, insbesondere deren Rotoren 10, nach vorne, hinten und den beiden Seiten verdeckt und nur von oben und unten sichtbar, wobei das vordere Antriebsaggregat 8 in einer Nachbildung eines Vogelkopfes, das hintere Antriebsaggregat 8 in einer Nachbildung eines Vogelschwanzes und die beiden seitlichen Antriebsaggregate 8 jeweils in einer Nachbildung von Vogelflügeln verborgen sind. Die Außenhülle 6 ist aus Kunststoff, der im visuellen und infraroten Licht undurchsichtig ist. Die Auskleidungen der Öffnungen 12 sind mit einer Radarabschirmung versehen, z.B. durch eine entsprechende Beschichtung. Auch andere Teile des Fluggeräts können entsprechend getarnt sein.

Die Antriebsaggregate 8 bilden Außenelemente, die durch vier Verbindungsmittel 14 in Form von Stangen mit einem zentralen Element 16 starr verbunden sind, das neben nicht dargestellten Sensoren zur Aufklärung ein Steuermittel 18 und ein Geräuschmittel 20 beherbergt. Das Steuermittel 18 dient zum Steuern aller Funktionen des Fluggeräts.

Vor den Nachbildungen der Vogelflügel umfasst das Fluggerät jeweils ein Flügelelement 22, die zum Schlagen vorgesehen sind und mittels eines nicht dargestellten Antriebs und eines Gelenks 24 nach oben und unten beweglich sind. In einer einfacheren Ausführungsform können die Flügelelemente 22 antriebslos beweglich sein und eine solche Formgebung und Beweglichkeit erhalten, dass sie durch den Fahrtwind zu einem Schlagen angetrieben werden. Die Flügelelemente 22 sind optisch auffälliger gestaltet als die starren Nachbildungen der Vogelflügel, z.B. durch eine entsprechende Farb- und/oder Mustergebung, so dass die Flügelelemente 22 bei einem Schlagen den optischen Eindruck des Fluggeräts deutlich dominieren. Die auffälligere Farbgebung ist in Fig. 2 anhand einer Schraffierung der Flügelelemente 22 und des Rumpfes angedeutet. In Fig. 2 sind die Flügelelemente 22 in einer Aufwärtsbewegung dargestellt. Durch ein Zwischengelenk 26 können z.B. für einen Flügelschlag nach unten geradere Flügelstellungen eingestellt werden.

Die Bewegung der gegenüber den Flügelnachbildungen beweglichen Flügelelemente 22 wird von dem Steuermittel 18 derart gesteuert, dass verschiedene Bewegungsmodi sich unregelmäßig abwechseln. Hierzu ist das Steuermittel 18 mit einem Steuerprogramm versehen, das einen eine Tierbewegung nachbildenden Bewegungsablauf verschiedener Bewegungsmodi steuert. Die Bewegungsmodi sind an die Steuerung der Antriebsaggregate 8 gekoppelt, so dass Bewegungsmodi der Flügelelemente 22 mit zugeordneten Flugmodi der Antriebsaggregate 8 verbunden sind.

In einem ersten Bewegungsmodus schlagen die Flügelelemente 22 in einem schnellen Modus, z.B. mit 4 Hz, wobei das Steuermittel 18 die Antriebsaggregate 8 so steuert, dass das Fluggerät in einem Steigflug fliegt. In einem zweiten Bewegungsmodus ruhen die Flügelelemente 22 in einer Stellung, die Flügel eines Vogels bei einem Gleiten einnehmen, wobei die Antriebsaggregate 8 in einem leichten Sinkflug gesteuert werden, der optisch einem Gleiten eines Vogels nachgebildet ist. Der dritte Bewegungsmodus umfasst ein langsames Schlagen der Flügelelemente 22, z.B. mit 3 Hz, und eine Steuerung der Antriebsaggregate 8 in einem in der Höhe und Geschwindigkeit gleichmäßigen Flug.

Außerdem ist das Steuermittel 18 dazu vorbereitet, die Antriebsaggregats 8 so anzusteuern, dass sie ein ungleichmäßiges Geräusch aussenden. Hierzu kann die Drehzahl der Rotoren 10 variiert werden, zweckmäßigerweise mit einer gleichzeitigen Verstellung der Blattneigung der Rotorblätter der Rotoren 10, so dass bei schwankender Drehzahl ein gleicher Auf- und/oder Vortrieb erreicht wird. Die Rotorblätter können auch so verstellt werden, dass ihr Luftwiderstand derart variiert, dass sie ein variierendes Geräusch aussenden. Die Variation des Geräusches kann an die Bewegung bzw. Bewegungsmodi der Flügelelemente 22 gekoppelt sein, z.B. in der Frequenz des Flügelschlags, oder z.B. ein statistisches Frequenzrauschen nachbilden. Zur weiteren Tarnung kann das Geräuschmittel 20 ein tierspezifisches Geräusch aussenden, z.B. das Singen eines Schwans, oder das Rufen von Gänsen.

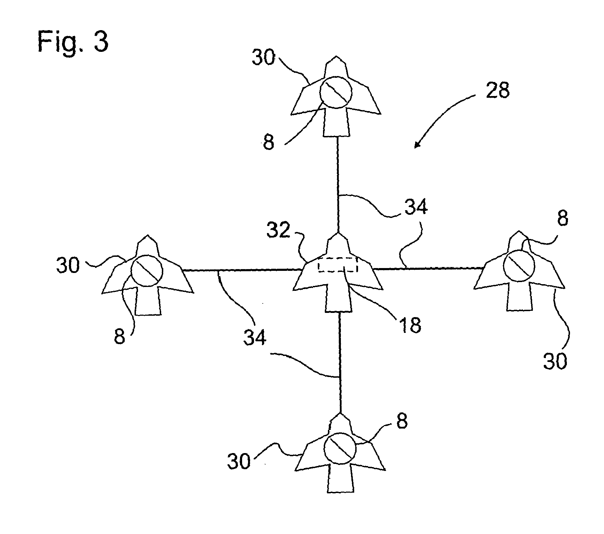

In Fig. 3 ist ein als Vogelschwarm getarntes Fahrzeug 28 dargestellt. Die nachfolgende Beschreibung beschränkt sich im Wesentlichen auf die Unterschiede zum Ausführungsbeispiel in den Figuren 1 und 2, auf das bezüglich gleich bleibender Merkmale und Funktionen verwiesen wird. Im Wesentlichen gleich bleibende Bauteile sind grundsätzlich mit den gleichen Bezugszeichen beziffert.

Das Fahrzeug 28 umfasst mehrere gleichartige und voneinander beabstandete Elemente 30, 32, die in ihrer Gesamtheit den Tierschwarm nachbilden. Jedes der Elemente 30, 32 bildet ein Tier nach und ist hierzu mit einer entsprechenden Außenhülle versehen. Äußere Elemente 30 sind jeweils durch ein Verbindungsmittel 34 mit einem inneren Element 32 verbunden, wobei die Verbindungsmittel 34 als starre Stäbe ausgebildet sind, die optisch unauffällig gehalten sind und z.B. einen Tarnanstrich tragen. In ihrer Gesamtheit machen sie aus jeder Richtung jeweils weniger als 1/10 der sichtbaren Fläche eines Elements 30, 32 aus.

Die äußeren Elemente 30 tragen jeweils Antriebsaggregate 8 und das innere Element 32 ein Steuermittel 18 hinsichtlich dessen Funktionen auf die Beschreibung zu den Figuren 1 und 2 verwiesen wird. Die Elemente 30, 32 sind jeweils so miteinander verbunden, dass sie ihre Relativposition zueinander verstellen können. Hierzu sind die Element 30, 32 jeweils in z.B. einem zentralen Verbindungsbereich über nicht dargestellte Gelenke mit den Verbindungsmitteln 34 verbunden, so dass sie in einem Kurvenflug seitlich verkippen können, ohne dass das Fahrzeug 28 als Ganzes verkippen muss. Der Verbindungsbereich liegt zweckmäßigerweise an der Oberseite der Elemente 30, 32, so dass die Gelenke von unten nicht sichtbar sind.

### Bezugszeichenliste

- 2: Fahrzeug
- 4: Tarnvorrichtung
- 6: Außenhülle
- 8: Antriebsaggregat
- 10: Rotor
- 12: Öffnung
- 14: Verbindungsmittel
- 16: Element
- 18: Steuermittel
- 20: Geräuschmittel
- 22: Flügelelement
- 24: Gelenk
- 26: Zwischengelenk
- 28: Fahrzeug
- 30: Element
- 32: Element
- 34: Verbindungsmittel

## Patentansprüche

1. Unbemanntes Fahrzeug (2, 28) mit einer Tarnvorrichtung (4),
**dadurch gekennzeichnet,**
**dass** die Tarnvorrichtung (4) eine Eigenschaft eines Tieres nachbildet.

2. Fahrzeug nach Anspruch 1,
**gekennzeichnet**
**durch** ein Antriebsaggregat (8), das durch die Tarnvorrichtung (4) zumindest nach vorne und zu den Seiten verdeckt ist.

3. Fahrzeug nach Anspruch 1 oder 2,
**gekennzeichnet**
**durch** mehrere Antriebsaggregate (8), wobei die Tarnvorrichtung (4) die Antriebsaggregate (8) mit Nachbildungen verschiedener Tierkörperteile verdeckt.

4. Fahrzeug nach einem der vorhergehenden Ansprüche,
**gekennzeichnet**
**durch** mehrere gleichartige und voneinander beabstandete Elemente (30, 32), die in ihrer Gesamtheit einen Tierschwarm nachbilden.

5. Fahrzeug nach Anspruch 4,
**dadurch gekennzeichnet,**
**dass** die Elemente (30, 32) jeweils durch zumindest ein Verbindungsmittel (34) mit zumindest einem der anderen Elemente (30, 32) verbunden sind und die Verbindungsmittel (34) jeweils höchstens 1/10 der sichtbaren Fläche eines Elements (30, 32) ausmachen.

6. Fahrzeug nach Anspruch 4 oder 5,
**dadurch gekennzeichnet,**
**dass** die Elemente (30, 32) periphere Elemente (30) und ein zentrales Element (32) sind und die peripheren Elemente (30) jeweils ein Antriebsaggregat (8) umfassen und das zentrale Element (32) ein Steuermittel (18).

7. Fahrzeug nach einem der vorhergehenden Ansprüche,
**dadurch gekennzeichnet,**
**dass** die Tarnvorrichtung (7) einen Vogel nachbildet und Flügelelemente (22) aufweist, die zum Schlagen vorgesehen sind, insbesondere zu einem Schlagantrieb durch einen Luftwiderstand vorbereitet sind.

8. Fahrzeug nach Anspruch 7,
**dadurch gekennzeichnet,**
**dass** die Flügelelemente (22) zusätzlich zu Flügeln vorhanden sind.

9. Fahrzeug nach Anspruch 8,
**dadurch gekennzeichnet,**
**dass** die Flügelelemente (22) optisch auffälliger gestaltet sind als die Flügel.

10. Fahrzeug nach einem der vorhergehenden Ansprüche,
**gekennzeichnet**
**durch** ein Steuermittel (18), das dazu vorgesehen ist, eine Bewegung ungleichmäßig zu gestalten und eine Tierbewegung nachzubilden.

11. Fahrzeug nach Anspruch 10,
**dadurch gekennzeichnet,**
**dass** das Steuermittel (18) dazu vorgesehen ist, mehrere unterschiedliche Bewegungsmodi abwechselnd zu steuern, insbesondere unrhythmisch.

12. Fahrzeug nach Anspruch 10 oder 11,
**dadurch gekennzeichnet,**
**dass** das Steuermittel (18) dazu vorgesehen ist, einen Steigflug und einen einem Gleitflug zumindest nachgebildeten Flug zu steuern.

13. Fahrzeug nach Anspruch 12,
**gekennzeichnet**
**durch** zum Schlagen vorgesehene Flügelelemente (22), wobei das Steuermittel (18) dazu vorgesehen ist, im Steigflug eine Bewegung und im Gleitflug ein Ruhen der Flügelelemente (22) zu steuern.

14. Fahrzeug nach einem der vorhergehenden Ansprüche,
**gekennzeichnet**
**durch** ein Steuermittel (18), das dazu vorgesehen ist, ein Antriebsaggregat (8) so anzusteuern, dass das Antriebsaggregat (8) ein ungleichmäßiges Geräusch aussendet.

15. Fahrzeug nach einem der vorhergehenden Ansprüche,
**dadurch gekennzeichnet,**
**dass** die Tarnvorrichtung (4) ein Geräuschmittel (20) zum Aussenden eines tierspezifischen Geräuschs umfasst.
